# EUROPEAN PATENT SPECIFICATION

(11) **EP 2 915 968 B1**
(45) Date of publication and mention of the grant of the patent: **23.11.2016**
(21) Application number: 15157896.0
(22) Date of filing: 05.03.2015
(51) Int. Cl.: F01N 3/021, F01N 11/00, F01N 9/00

(54) **Exhaust gas purification system for an internal combustion engine, and method for judging malfunction of a filter of an exhaust gas purification system for an internal combustion engine**
Abgasreinigungssystem für einen Verbrennungsmotor und Verfahren zur Beurteilung der Fehlfunktion des Abgasreinigungssystemfilters für einen Verbrennungsmotor
Système de purification de gaz d'échappement pour moteur à combustion interne et procédé d'évaluation d'un dysfonctionnement d'un filtre de système de purification de gaz d'échappement pour moteur à combustion interne

(30) Priority: 05.03.2014 JP 2014042514
(43) Date of publication of application: 09.09.2015
(73) Proprietor: Toyota Jidosha Kabushiki Kaisha, Toyota-shi, Aichi-ken 471-8571 (JP)
(72) Inventor: Nishijima, Hirokazu, Toyota-shi, Aichi-ken 471-8571 (JP); Takaoka Kazuya, Toyota-shi, Aichi-ken 471-8571 (JP); Kogo Tomoyuki, Toyota-shi, Aichi-ken 471-8571 (JP)
(74) Representative: Intès, Didier Gérard André

(56) References cited:
- EP-A1- 2 407 773
- EP-A1- 2 551 479
- EP-A1- 2 639 417
- WO-A1-2013/076869
- DE-A1-102011 122 165

## Description

### BACKGROUND OF THE INVENTION

### Field of the Invention:

The present invention relates to an exhaust gas purification system for an internal combustion engine, and a method for judging malfunction of a filter in an exhaust gas purification system for an internal combustion engine.

### Description of the Related Art:

Conventionally, a filter is provided for an exhaust gas passage in some cases in order to collect particulate matter discharged from an internal combustion engine such as a diesel engine or the like. The filter makes it possible to regenerate the function of the filter by raising the temperature so that the particulate matter, which is accumulated in the filter, is oxidized and removed. However, the filter malfunctions in some cases on account of the occurrence of, for example, any chipping or breakage and/or any damage caused by being melted due to the excessive raising of temperature when the regeneration process is performed as described above.

If the filter is out of order (malfunctions), the following possibility arises. That is, the amount of the particulate matter, which passes without being collected by the filter, may be increased, and the amount of the particulate matter, which is released to the outside of a vehicle, may be increased. In relation thereto, in recent years, a malfunction diagnosis, in which the differential pressure between the upstream and downstream sides of a filter is detected to judge that any malfunction is caused if the differential pressure is abnormally small, is suggested as a part of On-Board-Diagnostics (OBD) which is performed by a computer carried on a vehicle. However, in the case of On-Board-Diagnostics as described above, for example, the following inconvenience arises. That is, in one viewpoint, the differential pressure is changed depending on the accumulation amount of the particulate matter on the filter. In another viewpoint, the particulate matter, which is accumulated on the filter, is consequently oxidized on account of the influence of, for example, the temperature and NO₂, and it becomes difficult to grasp the accumulation amount of the particulate matter.

A malfunction diagnosis, which utilizes a PM sensor for detecting the amount of the particulate matter allowed to pass through a filter, has been suggested as another method for performing On-Board-Diagnostics (OBD) for the filter. In relation thereto, a technique is known, comprising time point estimating means which estimates an electric conduction time point upon malfunction as an electric conduction time point provided if a filter malfunctions by using, as an electric conduction time point, a time point at which electric conduction is started between electrodes by particulate matter adhered to the electrodes of a sensor element of an electrode type PM sensor, and malfunction judging means which judges that the filter malfunctions if an actual electric conduction time point comes earlier than the electric conduction time point upon malfunction (see, for example, Patent Document 1).

That is, the PM sensor, which is provided on the downstream side of the filter, is the sensor which gives the output at the point in time at which a predetermined amount of the particulate matter is accumulated. The PM sensor gives the output at an earlier timing if the filter is out of order, as compared with if the filter is normal. The known technique as described above is also recognized as follows. That is, the timing, at which the PM sensor gives the output in the case of the malfunction filter, is estimated, and the malfunction of the filter is judged on the basis of the presence or absence of the sensor output at that timing.

However, the tendency or easiness of accumulation of the particulate matter between the electrodes of the sensor element of the PM sensor is affected in some cases by the factors including, for example, the PM concentration in the exhaust gas existing in the vicinity of the PM sensor, the flow rate of the exhaust gas, and the temperature difference between the exhaust gas and the sensor element. Therefore, it has been feared that the amount of the particulate matter accumulated within the diagnosis period may be consequently changed by the factors, and the accuracy of the diagnosis may be lowered in the malfunction diagnosis based on the use of the PM sensor as well.

### PRECEDING TECHNICAL DOCUMENTS

### Patent Documents:

Patent Document 1: Japanese Patent Laid-Open No. 2012-122399A;
Patent Document 2: Japanese Patent Laid-Open No. 2010-275977A;
Patent Document 3: Japanese Patent Laid-Open No. 2012-127907A;
Patent Document 4: Japanese Translation of PCT International Application Publication No. 2008-502892A.

### SUMMARY OF THE INVENTION

### Task to Be Solved by the Invention:

The present invention has been made taking the foregoing circumstances into consideration, an object of which is to provide a technique which makes it possible to carry out the malfunction diagnosis for a filter at a higher accuracy.

### Solution for the Task:

In order to achieve the object as described above, the greatest feature of the present invention resides in an exhaust gas purification system comprising PM detecting means which is provided on a downstream side of a filter provided for an exhaust gas passage of an internal combustion engine and which collects particulate matter in the exhaust gas to detect an amount thereof by applying a voltage between electrodes, so that any malfunction of the filter is judged on the basis of an output signal of the PM detecting means at a predetermined time point, wherein the voltage applied between the electrodes is changed depending on at least any one of a concentration of the particulate matter in the exhaust gas existing in the vicinity of the PM detecting means, a flow rate of the exhaust gas, and a temperature difference between a temperature of the exhaust gas and a temperature of the PM detecting means.

In particular, there is provided an exhaust gas purification system for an internal combustion engine, comprising:
a filter which is provided for an exhaust gas passage of the internal combustion engine and which collects particulate matter in an exhaust gas;
PM detecting means which is provided on a downstream side of the filter in the exhaust gas passage, which collects the particulate matter in the exhaust gas allowed to pass through the filter between electrodes by applying a voltage between the electrodes, and which outputs a signal corresponding to an amount of collection of the particulate matter; and
filter malfunction judging means which judges malfunction of the filter on the basis of the output of the PM detecting means at a predetermined time point during the collection of the particulate matter, characterized in that
the voltage applied between the electrodes is changed during the collection of the particulate matter by the PM detecting means depending on at least one of a concentration of the particulate matter in the exhaust gas on the downstream side of the filter, a flow rate of the exhaust gas on the downstream side of the filter, and an exhaust gas temperature difference as a difference between a temperature of the exhaust gas on the downstream side of the filter and a temperature of the PM detecting means so that:
   the voltage applied between the electrodes is lowered if the concentration of the particulate matter in the exhaust gas on the downstream side of the filter is higher, as compared with if the concentration of the particulate matter is lower;
   the voltage applied between the electrodes is lowered if the flow rate of the exhaust gas on the downstream side of the filter is larger, as compared with if the flow rate of the exhaust gas is smaller; and/or
   the voltage applied between the electrodes is lowered if the exhaust gas temperature difference as the difference between the temperature of the exhaust gas on the downstream side of the filter and the temperature of the PM detecting means is larger, as compared with if the exhaust gas temperature difference is smaller.

In this context, it has been revealed that the amount of collection of the particulate matter to be collected between the electrodes of the PM detecting means is increased if the concentration of the particulate matter in the exhaust gas on the downstream side of the filter is higher as compared with if the concentration is of the particulate matter lower. Furthermore, it has been revealed that the amount of collection of the particulate matter to be collected between the electrodes of the PM detecting means is increased if the flow rate of the exhaust gas on the downstream side of the filter is larger as compared with if the flow rate of the exhaust gas is smaller. Moreover, it has been revealed that the amount of collection of the particulate matter to be collected between the electrodes of the PM detecting means is increased if the exhaust gas temperature difference, which is the difference between the temperature of the exhaust gas on the downstream side of the filter and the temperature of the PM detecting means, is larger as compared with if the exhaust gas temperature difference is smaller. On the other hand, it has been revealed that the amount of collection of the particulate matter to be collected between the electrodes is decreased if the voltage applied between the electrodes of the PM detecting means is lower, as compared with if the voltage is higher.

Thus, according to the present invention, it is possible to mitigate the influence exerted by the concentration of the particulate matter in the exhaust gas, the flow rate of the exhaust gas, and the exhaust gas temperature difference as the difference between the temperature of the exhaust gas and the temperature of the PM detecting means, on the amount of accumulation of the particulate matter between the electrodes of the PM detecting means. As a result, the amount of the particulate matter allowed to pass through the filter can be detected under the same condition irrelevant to the values of the concentration of the particulate matter in the exhaust gas, the flow rate of the exhaust gas, and the difference between the temperature of the exhaust gas and the temperature of the PM detecting means. It is possible to perform the malfunction judgment for the filter more accurately. In this specification, the phrase "mitigate the influence exerted by the concentration of the particulate matter in the exhaust gas, the flow rate of the exhaust gas, and the exhaust gas temperature difference as the difference between the temperature of the exhaust gas and the temperature of the PM detecting means, on the amount of accumulation of the particulate matter between the electrodes of the PM detecting means" means that the amount of change of the accumulation amount of the particulate matter between the electrodes of the PM detecting means, which depends on the concentration of the particulate matter in the exhaust gas, the flow rate of the exhaust gas, and the exhaust gas temperature difference, is reduced.

Further, in the present invention, it is also appropriate that the voltage applied between the electrodes of the PM detecting means is changed so that change of an amount of collection of the particulate matter collected between the electrodes, which depends on the concentration of the particulate matter, the flow rate of the exhaust gas, or the exhaust gas temperature difference, is mitigated to a predetermined allowable level.

Accordingly, it is possible to sufficiently mitigate the influence exerted on the accumulation amount of the particulate matter between the electrodes of the PM detecting means by the concentration of the particulate matter in the exhaust gas, the flow rate of the exhaust gas, and the exhaust gas temperature difference as the difference between the temperature of the exhaust gas and the temperature of the PM detecting means. As a result, the amount of the particulate matter allowed to pass through the filter can be detected more reliably under the same condition, and the accuracy of the malfunction judgment for the filter can be improved more reliably. In the foregoing description, the term "predetermined allowable level" cannot be discriminately referred to on account of the relation with respect to other system components. However, the predetermined allowable level refers to such a level that no trouble arises to carry out the malfunction diagnosis for the filter. For example, it is also appropriate that the change of the collection amount of the particulate matter to be collected between the electrodes depending on the concentration of the particulate matter, the flow rate of the exhaust gas, or the exhaust gas temperature difference is, for example, within ±3%, within ±1%, or within ±0.5%.

Further, in the present invention, it is also appropriate that the voltage applied between the electrodes of the PM detecting means is changed so that change of an amount of collection of the particulate matter collected between the electrodes, which depends on the concentration of the particulate matter, the flow rate of the exhaust gas, or the exhaust gas temperature difference, is canceled.

Accordingly, it is possible to cancel the influence exerted on the accumulation amount of the particulate matter between the electrodes of the PM detecting means by the concentration of the particulate matter in the exhaust gas, the flow rate of the exhaust gas, and/or the exhaust gas temperature difference as the difference between the temperature of the exhaust gas and the temperature of the PM detecting means. As a result, the amount of the particulate matter allowed to pass through the filter can be detected more reliably under the same condition, and the accuracy of the malfunction judgment for the filter can be improved more reliably. In the foregoing description, the phrase "voltage applied between the electrodes of the PM detecting means is changed so that the change of the amount of collection of the particulate matter to be collected between the electrodes, which depends on the concentration of the particulate matter, the flow rate of the exhaust gas, or the exhaust gas temperature difference, is canceled" means that the voltage applied between the electrodes of the PM detecting means is changed so that the change of the collection amount of the particulate matter between the electrodes, which depends on the concentration of the particulate matter, the flow rate of the exhaust gas, or the exhaust gas temperature difference, becomes zero.

Further, in this specification, the phrase "influence exerted on the accumulation amount of the particulate matter between the electrodes of the PM detecting means by the concentration of the particulate matter in the exhaust gas, the flow rate of the exhaust gas, and/or the exhaust gas temperature difference as the difference between the temperature of the exhaust gas and the temperature of the PM detecting means" means that it is intended not to change the accumulation amount of the particulate matter between the electrodes of the PM detecting means even if the value or values of the concentration of the particulate matter in the exhaust gas, the flow rate of the exhaust gas, and/or the exhaust gas temperature difference is/are changed.

Further, in the present invention, it is also appropriate that the predetermined time point is a time point brought about after a predetermined time after completion of regeneration control of the PM detecting means; and
the filter malfunction judging means judges that the filter malfunctions if an output signal of the PM detecting means provided at the predetermined time point is larger than a predetermined threshold value.

In this context, the regeneration control is also performed for the PM detecting means in the same manner as in the filter such that the electrodes are subjected to the raising of temperature at an appropriate timing and the particulate matter, which is accumulated between the electrodes are oxidized and removed. In the present invention, the amount of the particulate matter, which is accumulated on the electrodes of the PM detecting means during the period until the elapse of a predetermined time after the completion of the regeneration control for the PM detecting means, is detected, and thus it is possible to detect the accumulation amount of the particulate matter as starting from the state in which the accumulation is not caused. It is possible to perform the malfunction judgment for the filter more accurately. Furthermore, it is possible to perform the malfunction judgment for the filter by means of the simple process in which a predetermined threshold value is compared with the output signal of the PM detecting means at the predetermined time point.

Further, in the present invention, it is also appropriate that two threshold values, which are a predetermined first threshold value and a predetermined second threshold value larger than the first threshold value, are set; and
the filter malfunction judging means judges that the filter malfunctions if the output signal of the PM detecting means, which is provided at a time point earlier than the predetermined time point, is larger than the second threshold value, and the filter malfunction judging means judges that the filter malfunctions if the output signal of the PM detecting means, which is provided at the predetermined time point, is larger than the first threshold value.

In this context, there is a difference in relation to the extent of malfunction of the filter as well. If the extent of malfunction is serious, then the amount of the particulate matter allowed to pass through the filter is large as well, and the amount of the particulate matter accumulated between the electrodes of the PM detecting means is increased from the early stage. On the other hand, if the extent of malfunction is slight, then the amount of the particulate matter allowed to pass through the filter is small, and the difference does not appear so much as compared with the filter in which the amount of the particulate matter accumulated between the electrodes of the PM detecting means is normal.

On the contrary, in the present invention, even in the case of the time point earlier than the predetermined time point, if the output of the PM detecting means is not less than the second threshold value which is relatively large, it is judged that the filter malfunctions. In this case, it is considered that the extent of filter malfunction is serious. On the other hand, at the predetermined time point, if the output of the PM detecting means is not less than the first threshold value which is relatively small, it is judged that the filter malfunctions. In this case, it is considered that the extent of malfunction of the filter is slight.

In this way, in the present invention, the two types of threshold values are used, and thus the malfunction can be also judged at the predetermined time point for the malfunction filter in which the extent of malfunction is slighter, while the malfunction can be judged at the timing earlier than the predetermined time point for the malfunction filter in which the extent of malfunction is more serious. As a result, it is possible to widen the range of the extent of malfunction as the objective of the malfunction judgment, and it is possible to provide a sufficiently short time for the time required to judge the malfunction on average.

According to another aspect of the present invention, there is provided a method for judging malfunction of a filter of an exhaust gas purification system for an internal combustion engine, the exhaust gas purification system comprising:
the filter which is provided for an exhaust gas passage of the internal combustion engine and which collects particulate matter in an exhaust gas; and
PM detecting means which is provided on a downstream side of the filter in the exhaust gas passage, which collects the particulate matter in the exhaust gas allowed to pass through the filter between electrodes by applying a voltage between the electrodes, and which outputs a signal corresponding to an amount of collection of the particulate matter; and the method characterized by comprising:
   changing the voltage applied between the electrodes of the PM detecting means so that change of the amount of collection of the particulate matter collected between the electrodes, which depends on at least one of three factors of a concentration of the particulate matter in the exhaust gas on the downstream side of the filter, a flow rate of the exhaust gas on the downstream side of the filter, and an exhaust gas temperature difference as a difference between a temperature of the exhaust gas on the downstream side of the filter and a temperature of the PM detecting means, is canceled or mitigated during the collection of the particulate matter by the PM detecting means; and
   judging the malfunction of the filter on the basis of magnitude of output of the PM detecting means.

The means for solving the problem according to the present invention can be used while being combined with each other as far as possible.

### EFFECT OF THE INVENTION

According to the present invention, it is possible to carry out the malfunction diagnosis for the filter at a higher accuracy.

### BRIEF DESCRIPTION OF THE DRAWINGS

Fig. 1 shows a schematic arrangement of an internal combustion engine, a part of an exhaust system thereof, and a control system according to a first embodiment of the present invention.
Fig. 2 illustrates a technique to judge filter malfunction in the first embodiment of the present invention.
Fig. 3 illustrates the influences exerted by the PM concentration and the flow rate of the exhaust gas on the accumulation amount of PM between electrodes of a sensor element of a PM sensor.
Fig. 4 illustrates the influences exerted by the exhaust gas temperature difference and the application voltage on the accumulation amount of PM between the electrodes of the sensor element of the PM sensor.
Fig. 5 illustrates the situations in which the accumulation velocity is made constant on the electrodes of the sensor element of the PM sensor by changing the application voltage with respect to the change of the PM concentration, the flow rate of the exhaust gas, and the exhaust gas temperature difference.
Fig. 6 shows a flow chart illustrating the process content of a filter malfunction judgment routine in the first embodiment of the present invention.
Fig. 7 illustrates the way of determining the threshold value in the first embodiment of the present invention.
Fig. 8 illustrates the setting of the threshold value and the judgment timer value (timer value for judgment) in a second embodiment of the present invention.
Fig. 9 shows a flow chart illustrating the process content of a filter malfunction judgment routine 2 in the second embodiment of the present invention.
Fig. 10 shows a flow chart illustrating the process content of a filter malfunction judgment routine 3 in a third embodiment of the present invention.
Fig. 11 shows a flow chart illustrating the process content of a filter malfunction judgment routine 4 in the third embodiment of the present invention.
Fig. 12 shows a flow chart illustrating the process content of a filter malfunction judgment routine 5 in the third embodiment of the present invention.

### MODE FOR CARRYING OUT THE INVENTION

The best mode for carrying out the invention will be explained in detail below by way of example with reference to the drawings.

### First Embodiment

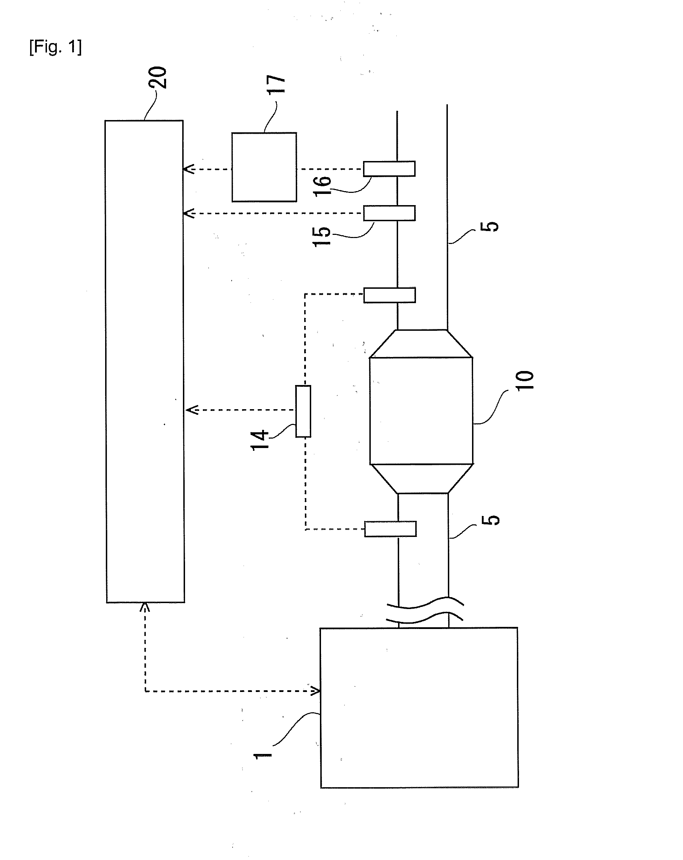

Fig. 1 shows a schematic arrangement of an internal combustion engine 1, an exhaust system thereof, and a control system according to this embodiment. In Fig. 1, the interior of the internal combustion engine 1 and an intake system thereof are omitted. With reference to Fig. 1, an exhaust tube 5, which serves as an exhaust gas passage for allowing the exhaust gas discharged from the internal combustion engine 1 to flow therethrough, is connected to the internal combustion engine 1. The exhaust tube 5 is connected to an unillustrated muffler on the downstream side. The exhaust tube 5 is provided with a filter 10 which collects the particulate matter (hereinafter referred to as "PM" as well) contained in the exhaust gas. The filter 10 of this embodiment may have the function to merely collect PM contained in the exhaust gas. Alternatively, the filter 10 may be carried with a catalyst for exhaust gas purification, including, for example, DPNR which also has the function of the storage reduction NOx catalyst and SCRF which also has the function to serve as the selective catalytic reduction catalyst.

A differential pressure sensor 14, which detects the differential pressure between the upstream and the downstream sides of the filter 10, is provided on the upstream and downstream sides of the filter 10 for the exhaust tube 5. Furthermore, an exhaust gas temperature sensor 15, which detects the temperature of the exhaust gas discharged from the filter 10, is provided on the downstream side of the filter 10. Moreover, a PM sensor 16, which serves as the PM detecting means for detecting PM allowed to pass through the filter 10 or measuring the concentration, is provided on the downstream side of the exhaust gas temperature sensor 15.

The structure of the PM sensor 16 will now be explained. The PM sensor 16 is a PM sensor of the electrode type, which is constructed in such a form that at least a pair of electrodes is provided for a sensor element provided in the PM sensor 16. Only one pair of electrodes may be provided for the sensor element, or a plurality of electrodes may be provided therefor. For example, a so-called comb-shaped electrode, in which a plurality of electrodes is aligned, may be provided. The PM sensor 16 is used such that the voltage is applied between the electrodes of the sensor element. PM, which is contained in the exhaust gas, adheres between the pair of electrodes of the sensor element of the PM sensor 16. PM is composed of carbon particles, and PM has the conductivity. Therefore, if the amount of adhesion of PM is increased, the current flows between the electrodes (electric conduction is caused). The value of the current is the value which corresponds to the amount of adhesion of PM, i.e., the value which corresponds to the amount of PM contained in the exhaust gas. Therefore, the amount of PM can be detected by reading the current value (or the resistance value between the electrodes correlated with the current value).

ECU 20 described later on executes the sensor regeneration control for removing PM accumulated between the electrodes of the sensor element of the PM sensor 16 (hereinafter referred to as "electrodes of the PM sensor 16" for the purpose of simplification), in addition to the filter regeneration process for regenerating the function of the filter 10 by oxidizing and removing PM accumulated on the filter 10. In the sensor regeneration control, if PM of not less than a prescribed amount is accumulated between the electrodes of the PM sensor 16, the heating is performed between the electrodes to about 650°C to 800°C by using an unillustrated heater so that accumulated PM is oxidized and removed. When the sensor regeneration control is performed, the PM sensor 16 returns to the state in which PM does not exist between the electrodes of the PM sensor 16. Therefore, the output current of the PM sensor is also lowered to a value in the vicinity of zero.

The electronic control unit (ECU) 20, which is provided to control the internal combustion engine 1 and the exhaust system, is provided in combination with the internal combustion engine 1 and the exhaust system thereof constructed as described above. ECU 20 is the unit which controls, for example, the operation state of the internal combustion engine 1 in response to the operation condition of the internal combustion engine 1 and the request of a driver and which also performs the control concerning the exhaust gas purification system including the filter 10. ECU 20 is provided with, for example, CPU, ROM, and RAM. ROM stores programs for performing various types of control of the internal combustion engine 1 and maps stored with data.

The filter malfunction judgment routine of this embodiment explained later on is also one of the programs stored in ROM in ECU 20. In this embodiment, the output of the PM sensor 16 is electrically connected to SCU (Sensor Control Unit) 17. The temperature of the sensor element (not shown) of the PM sensor 16 can be measured by SCU 17. Furthermore, the differential pressure sensor 14, the exhaust gas temperature sensor 15, and the PM sensor 16 are finally connected to ECU 20, and the outputs of the respective sensors are inputted into ECU 20. In this embodiment, the exhaust gas purification system includes the components except for the internal combustion engine 1, of the components shown in Fig. 1.

Next, an explanation will be made about On-Board-Diagnostics (OBD) in the exhaust gas purification system according to this embodiment. If the filter 10 malfunctions (is out of order) in the exhaust system of the internal combustion engine 1, then the amount of PM allowed to pass through the filter 10 is increased, PM is accumulated between the electrodes of the PM sensor 16, and thus the resistance value between the electrodes is decreased. By utilizing this fact, it has been hitherto judged that the filter malfunctions if it is detected that the output current, which is obtained when a constant voltage is applied to the electrodes of the PM sensor 16, becomes larger than a threshold value at a predetermined time point.

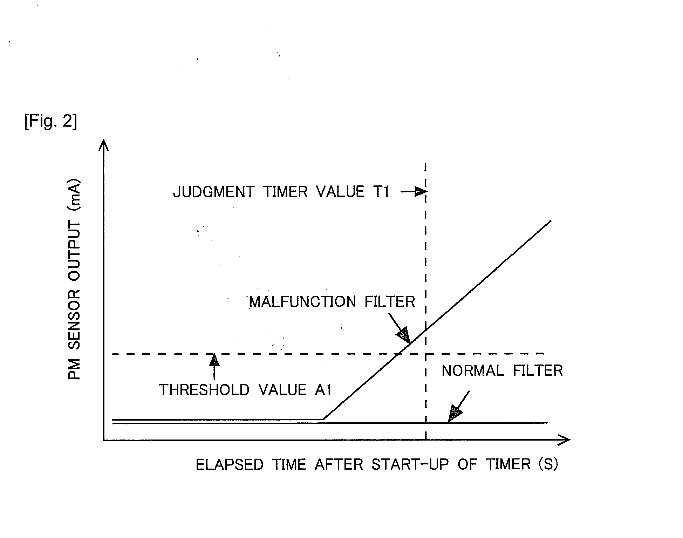

A more specified judgment technique will be explained by using Fig. 2. In Fig. 2, the horizontal axis represents the elapsed time after the start-up of a timer, and the vertical axis represents the output current of the PM sensor 16. In Fig. 2, the start-up time point of the timer is the point in time at which the temperature of the electrodes of the PM sensor 16 is cooled to such an extent that PM can be accumulated, after the completion of the sensor regeneration control described above. As shown in Fig. 2, in the case of the normal filter, the amount of PM itself, which passes through the filter 10, is small. Therefore, PM is hardly accumulated on the detecting section of the PM sensor 16. Therefore, in the case of the normal filter, the output of the PM sensor 16 is almost zero as it is, and the output is not changed after the start-up of the timer as well.

On the other hand, in the case of the malfunction filter, if a certain time elapses after the start-up of the timer, then PM is accumulated between the electrodes of the PM sensor 16, and the current flows with ease. Therefore, the output current of the PM sensor 16 begins to increase, and the output current continuously increases as the time elapses. Therefore, if the output current of the PM sensor 16 is larger than the threshold value A1 at the point in time at which the value of the timer arrives at the judgment timer value (timer value for judgment) T1, it is possible to judge that the filter 10 is out of order (malfunctions). If the output of the PM sensor 16 is not more than the threshold value A1 at the point in time at which the value of the timer arrives at the judgment timer value T1, it is possible to judge that the filter 10 is normal. In this context, the judgment timer value T1 corresponds to the predetermined time point. The threshold value A corresponds to the predetermined threshold value.

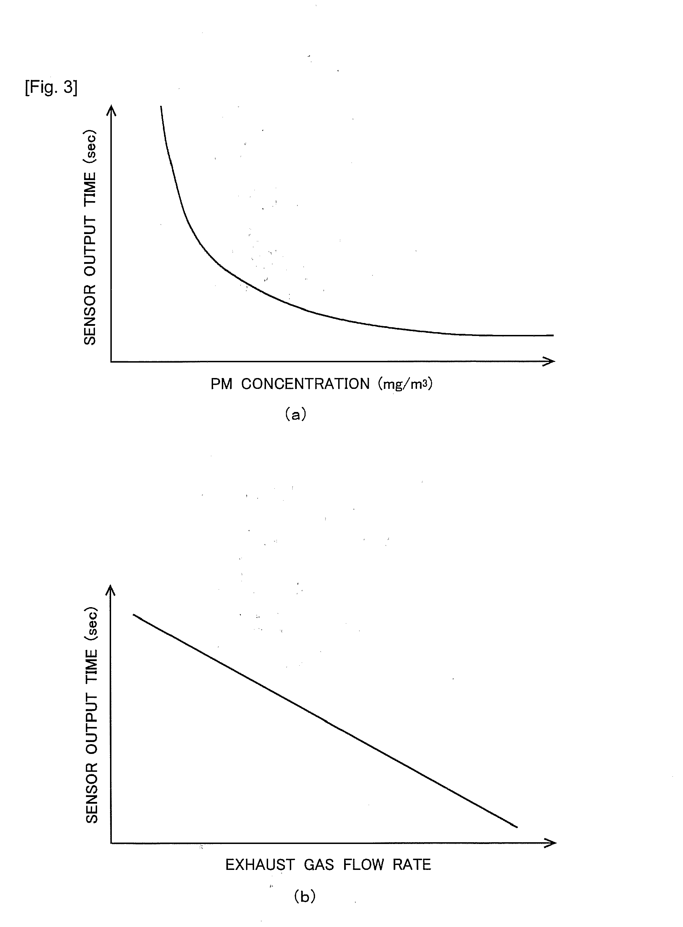

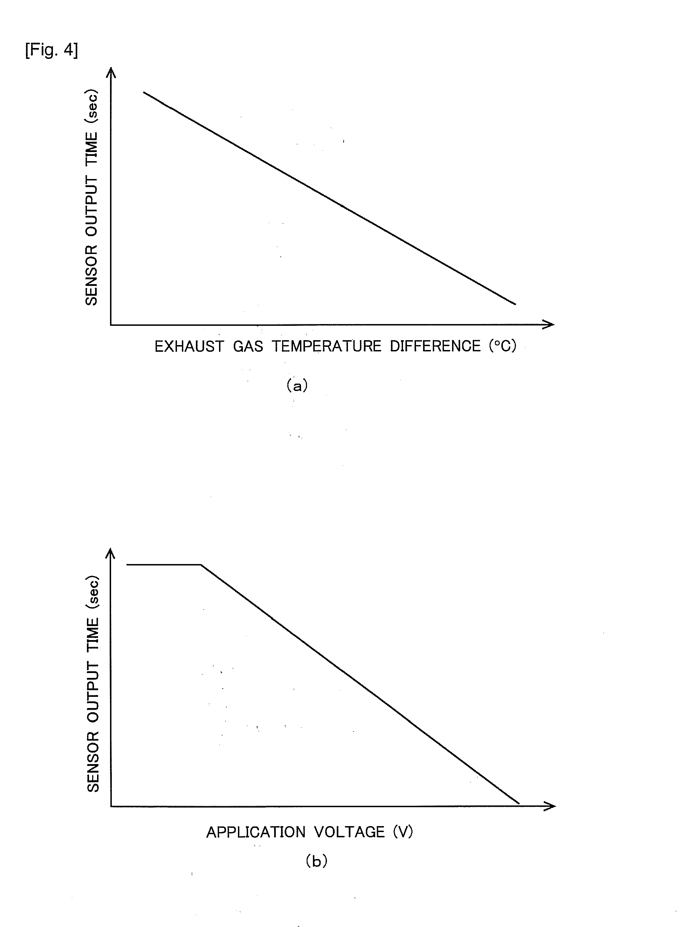

However, the accumulation amount of PM between the electrodes of the PM sensor 16 is affected, for example, by the PM concentration of the exhaust gas existing in the vicinity of the PM sensor 16, the flow rate of the exhaust gas, and the difference between the exhaust gas temperature and the temperature of the electrodes of the PM sensor 16 (hereinafter referred to as "exhaust gas temperature difference" as well). Figs. 3 and 4 illustrate the influences of the factors described above exerted on the accumulation amount of PM between the electrodes of the PM sensor 16. For example, as shown in Fig. 3A, as the PM concentration is more raised in the exhaust gas existing in the vicinity of the PM sensor 16, the accumulation amount of PM between the electrodes of the PM sensor 16 is relatively increased. As a result, the sensor output time is shortened. This situation arises on account of the fact that the higher the PM concentration of the exhaust gas existing in the vicinity of the PM sensor 16 is, the more increased the amount of PM introduced between the electrodes of the PM sensor 16 is. The "sensor output time" referred to herein is, for example, the time at which the value of the output of the PM sensor 16 exceeds the threshold value A1 in relation to the malfunction filter after the start-up of the timer. Furthermore, in this context, the phrase "exhaust gas existing in the vicinity of the PM sensor" indicates the exhaust gas existing in the area having the same or equivalent characteristic as that of the exhaust gas which is introduced into the PM sensor and in which PM is detected. In other words, the phrase may be, for example, "exhaust gas existing on the downstream side of the filter 10". Moreover, in this context, the phrase "PM concentration in the exhaust gas existing in the vicinity of the PM sensor 16" is not the PM concentration which is changed resulting from the malfunction of the filter 10, but the phrase is directed, as the objective, to the PM concentration which is changed resulting from, for example, the operation state of the internal combustion engine and which is irrelevant to the state of the filter 10.

Furthermore, as shown in Fig. 3B, as the flow rate of the exhaust gas existing in the vicinity of the PM sensor 16 is more increased, the accumulation amount of PM between the electrodes of the PM sensor 16 is relatively increased. As a result, the sensor output time is shortened. This situation arises on account of the following fact. That is, if the flow rate of the exhaust gas is increased, the amount of PM introduced between the electrodes of the PM sensor 16 per unit time is increased. Further, when the flow rate of the exhaust gas is increased, then the friction is thereby increased between PM's or between PM and the exhaust system components, and the amount of electrification of PM brought about by the friction is increased. Therefore, PM is electrostatically attracted with ease to the electrodes to which the voltage is applied.

Moreover, as shown in Fig. 4A, as the exhaust gas temperature difference is more increased, the accumulation amount of PM between the electrodes of the PM sensor 16 is relatively increased. As a result, the sensor output time is shortened. This situation arises on account of the following fact. That is, if minute particles exist in the field in which the temperature gradient is present, the particles are moved while receiving the force directed toward the low temperature side. This phenomenon is referred to as "thermal phoresis". If the exhaust gas temperature difference is decreased, the velocity of the thermal phoresis is lowered. On the other hand, as shown in Fig. 4B, the following fact has been revealed. That is, the higher the application voltage applied between the electrodes of the PM sensor 16 is, the more increased relatively the accumulation amount of PM between the electrodes of the PM sensor 16 is. As a result, the sensor output time is shortened. This situation arises on account of the following fact. That is, the higher the application voltage applied between the electrodes of the PM sensor 16 is, the stronger the intensity of the electric field generated between the electrodes is. In this state, the electrodes electrostatically attract electrified PM more easily.

In Figs. 3B, 4A, and 4B described above, the relationships between the sensor output time and the exhaust gas flow rate, the exhaust gas temperature difference, and the application voltage respectively are the linear relationships. However, these drawings depict the graphs to indicate the tendency of the relationships between the sensor output time and the change of the exhaust gas flow rate, the exhaust gas temperature difference, and the application voltage, and it is not especially meant that the relationships are linear.

In this embodiment, the application voltage between the electrodes of the PM sensor 16 is corrected by utilizing the characteristic as described above. Accordingly, the influence, which is exerted on the sensor output time and the accumulation amount of PM between the electrodes of the PM sensor, for example, by the PM concentration in the exhaust gas existing in the vicinity of the PM sensor 16, the flow rate of the exhaust gas, and the exhaust gas temperature difference, is canceled or mitigated.

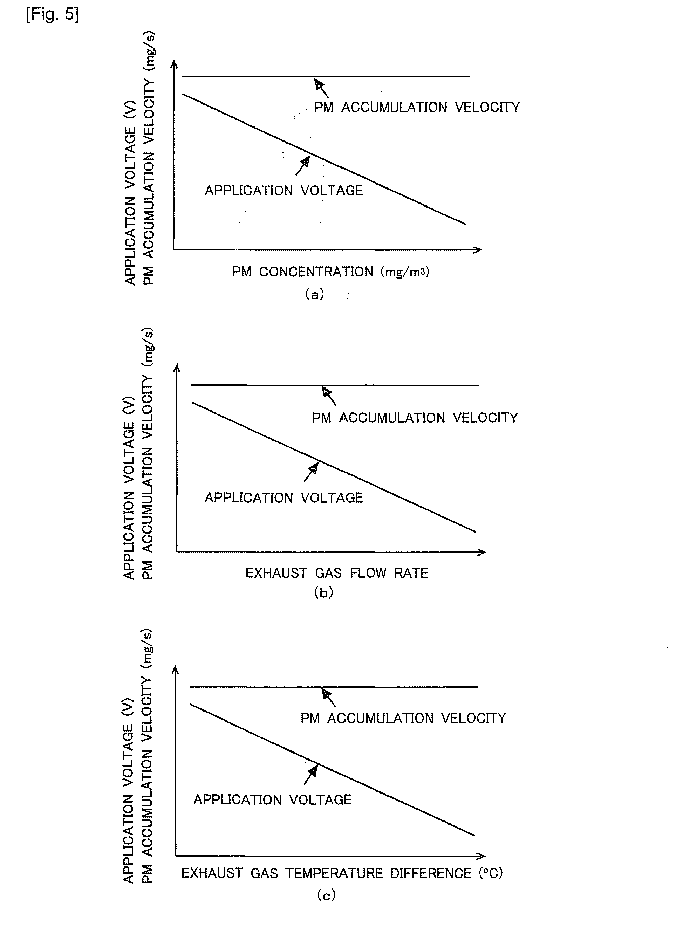

Fig. 5 illustrates examples of the change of the PM accumulation velocity and the change of the application voltage with respect to the change of the respective factors when it is intended that the PM accumulation velocity on the electrodes of the PM sensor 16 is made constant by changing the application voltage applied to the PM sensor 16, with respect to the change of the PM concentration in the exhaust gas existing in the vicinity of the PM sensor 16, the flow rate of the exhaust gas, and the exhaust gas temperature difference. As understood from Figs. 5A to 5C, in this embodiment, the application voltage is lowered as the PM concentration in the exhaust gas existing in the vicinity of the PM sensor 16 is more raised. Furthermore, the application voltage is lowered as the flow rate of the exhaust gas in the exhaust gas existing in the vicinity of the PM sensor 16 is more raised. Moreover, the application voltage is lowered as the exhaust gas temperature difference is more increased.

In accordance with the control as described above, the PM accumulation velocity is allowed to have a constant value irrelevant to the values of the PM concentration, the flow rate of the exhaust gas, and the exhaust gas temperature difference, and the influence, which is exerted by the respective factors on the accumulation amount of PM between the electrodes of the PM sensor 16, is canceled. Accordingly, on condition that the extent of malfunction of the filter 10 is identical, it is possible to obtain the same output time of the PM sensor 16 irrelevant to the values of the PM concentration, the flow rate of the exhaust gas, and the exhaust gas temperature difference. It is possible to perform the malfunction judgment for the filter 10 more accurately on the basis of the output timing of the PM sensor 16.

Figs. 5A to 5C provide the graphs in which the application voltage is changed linearly with respect to the change of the PM concentration, the exhaust gas flow rate, and the exhaust gas temperature difference respectively. However, in relation thereto, the graphs are provided to indicate the tendency of the relationships between the application voltage provided to maintain the constant PM accumulation velocity and the PM concentration, the exhaust gas flow rate, and the exhaust gas temperature difference, which do not especially mean that the relationships are linear.

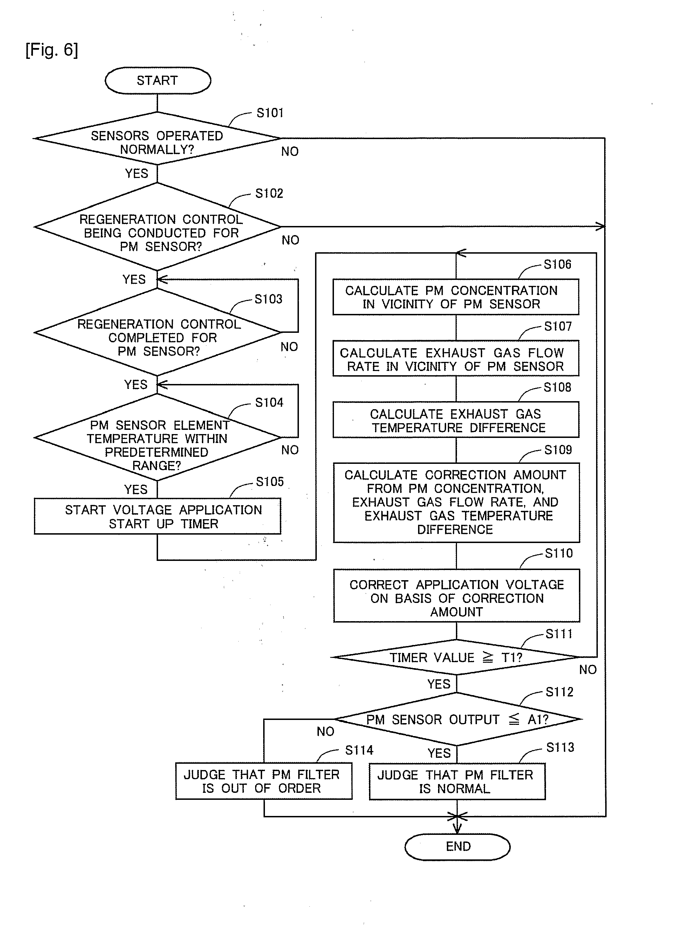

Fig. 6 shows a flow chart of a filter malfunction judgment routine according to this embodiment. This routine resides in a program stored in ROM of ECU 20. The routine is executed by ECU 20 every time when a predetermined time elapses during the operation of the internal combustion engine 1.

If this routine is executed, at first, in S101, it is judged whether or not an unillustrated air flow meter as well as the exhaust gas temperature sensor 15, the PM sensor 16 and the like is operated normally. More specifically, the judgment may be made in accordance with the past output history. However, the method of judgment is not specifically limited. In this procedure, if it is judged that any one of the sensors is not operated normally, it is judged that it is difficult to correctly perform the malfunction judgment for the filter 10 even if this routine is executed. Therefore, this routine is once completed. On the other hand, if it is judged that the sensors are operated normally, the routine proceeds to S102.

In S102, it is judged whether or not the regeneration control is being conducted for the PM sensor 16. In this routine, the measurement of the PM accumulation amount is started at the point in time at which the regeneration control is completed for the PM sensor 16 and the temperature of the electrodes of the PM sensor 16 is lowered. As described later on, this procedure is performed in order that the time measurement is started in the state in which PM is not accumulated between the electrodes of the PM sensor and the accumulation of PM can be caused. Therefore, if the regeneration control is not being conducted for the PM sensor 16, it is feared that PM has been already accumulated between the electrodes of the PM sensor 16. Therefore, the judgment is not performed in such a situation. Therefore, if it is judged that the regeneration control is not being conducted for the PM sensor 16 in S102, this routine is once completed. On the other hand, if it is judged that the regeneration control is being conducted for the PM sensor 16, the routine proceeds to S103.

In S103, it is judged whether or not the regeneration control is completed for the PM sensor 16. In this procedure, if it is judged that the regeneration control is completed for the PM sensor 16, it is judged that PM is not accumulated between the electrodes of the PM sensor 16 at this point in time, and there is a possibility to perform the filter malfunction judgment. Therefore, the routine proceeds to S104. On the other hand, if it is judged that the regeneration control is not completed for the PM sensor 16, the routine returns to the position before the process of S103. The process of S103 is repeatedly executed until the regeneration control is completed for the PM sensor 16.

In S104, it is judged whether or not the temperature of the electrodes of the PM sensor 16 is within a predetermined range. Specifically, the temperature of the sensor element of the PM sensor 16 is detected by SCU 17, and it is judged whether or not the temperature is a low temperature of such an extent that the PM measurement can be performed, for the following reason. That is, if the temperature of the sensor element of the PM sensor 16 is high while exceeding the predetermined range, it is feared that PM, which is introduced between the electrodes of the sensor element, may be oxidized and removed, and the accumulation amount of PM allowed to pass through the filter 10 cannot be detected correctly.

In this procedure, if the temperature of the sensor element of the PM sensor 16 is within the predetermined range, it is possible to judge that the accumulation amount of PM can be correctly detected, and the malfunction judgment can be performed for the filter 10. Therefore, the routine proceeds to S105. On the other hand, if the temperature of the sensor element of the PM sensor 16 is not within the predetermined range, it is judged that the accumulation amount of PM cannot be correctly detected, and it is difficult to correctly perform the malfunction judgment for the filter 10. Therefore, the routine returns to the position before the process of S104. Then, the process of S104 is repeatedly executed until it is judged that the temperature of the sensor element of the PM sensor 16 is lowered, and the temperature is within the predetermined range in S104.

Subsequently, in S105, the application of the voltage to the sensor element of the PM sensor 16 is started, and the timer is started up. If the process of S105 is completed, the routine proceeds to S106. In S106, the PM concentration in the exhaust gas existing in the vicinity of the PM sensor 16 is calculated. A specified calculating method for the PM concentration will be described later on. If the process of S106 is completed, the routine proceeds to S107.

In S107, the flow rate of the exhaust gas existing in the vicinity of the PM sensor 16 is calculated. Specifically, the flow rate may be calculated from the output value of the unillustrated air flow meter and the output value of the exhaust gas temperature sensor 15. Alternatively, the flow rate may be derived by reading the flow rate value corresponding to the output value of the air flow meter and the output value of the exhaust gas temperature sensor 15 from a map which indicates the relationship between these values and the flow rate of the exhaust gas. If the process of S107 is completed, the routine proceeds to S108.

In S108, the exhaust gas temperature difference is calculated. Specifically, the exhaust gas temperature difference is calculated by performing an operation in which the value of the temperature of the sensor element of the PM sensor 16 detected by SCU 17 is subtracted from the value of the exhaust gas temperature obtained from the output of the exhaust gas temperature sensor 15. If the process of S108 is completed, the routine proceeds to S109.

In S109, the correction amount of the application voltage is calculated on the basis of the PM concentration calculated in S106, the flow rate value of the exhaust gas calculated in S107, and the value of the exhaust gas temperature difference calculated in S108. Specifically, the application voltage, which corresponds to the calculated PM concentration, is read from the map which indicates the relationship between the PM concentration and the application voltage to maintain the PM accumulation velocity and which is prepared, for example, on the basis of the graph shown in Fig. 5A, in accordance with the PM concentration calculated in S106. The correction amount 1 of the application voltage, which is based on the PM concentration, is derived from the difference between the present application voltage value and the read application voltage.

Similarly, the correction amount 2 of the application voltage, which corresponds to the flow rate value of the exhaust gas, is derived on the basis of the flow rate value of the exhaust gas calculated in S107 and the graph shown in Fig. 5B. Furthermore, the correction amount 3 of the application voltage, which corresponds to the exhaust gas temperature difference, is derived on the basis of the exhaust gas temperature difference calculated in S108 and the graph shown in Fig. 5C. Then, the final correction amount of the application voltage is calculated by adding up the correction amount 1, the correction amount 2, and the correction amount 3. If the process of S109 is completed, the routine proceeds to S110.

In S110, the application voltage to be applied to the PM sensor 16 is corrected depending on the correction amount calculated in S109. If the process of S110 is completed, the routine proceeds to S111.

In S111, it is judged whether or not the measured value of the timer is not less than the judgment timer value T1. In this procedure, if it is judged that the measured value of the timer is not less than the judgment timer value T1, it is possible to judge that the timing is provided to read the output value of the PM sensor 16 and judge the malfunction of the filter 10. Therefore, the routine proceeds to S112. On the other hand, if it is judged that the measured value of the timer is less than the judgment timer value T1, it is possible to judge that the timing is not provided yet to judge the malfunction of the filter 10. Therefore, the routine returns to the position before the process of S106, and the correction of the application voltage, which corresponds to the respective factors that affect the measured value of the PM sensor 16, is continued.

In S112, the output value of the PM sensor 16 is read, and the output value is compared with the threshold value A1. Then, if the output value of the PM sensor 16 is not more than the threshold value A1, it is judged that the amount of PM, which passes through the filter 10, is sufficiently small. Therefore, the routine proceeds to S113. On the other hand, if the output value of the PM sensor 16 is larger than the threshold value A1, it is judged that the amount of PM, which passes through the filter 10, is abnormally large. Therefore, the routine proceeds to S114.

In S113, it is judged that the filter 10 is normal. Furthermore, in S114, it is judged that the filter 10 is out of order. If the process of S113 or S114 is completed, this routine is once completed. If it is judged in S114 that the filter 10 is out of order, the driver is informed of the gist of that by means of a method including, for example, the display notification, the voice notification, and the lighting of lamp.

As explained above, in this embodiment, the application voltage, which is applied to the sensor element of the PM sensor 16, is corrected so as to cancel the influence exerted on the accumulation amount of PM between the electrodes of the PM sensor 16 by the three factors of the PM concentration in the exhaust gas existing in the vicinity of the PM sensor 16, the flow rate of the exhaust gas, and the exhaust gas temperature difference. As a result, it is possible to perform the malfunction judgment for the filter 10 more accurately. In this embodiment, the predetermined time is the time ranging from the affirmative judgment performed in the process of S103 to the affirmative judgment performed in the process of S112.

Next, an explanation will be made about a technique to calculate the PM concentration in the exhaust gas existing in the vicinity of the PM sensor 16 in S106 of the routine described above. As the first stage of the calculation of the PM concentration, the amount of PM (weight, number of particles, concentration) discharged from the internal combustion engine 1 is estimated. For this purpose, the following technique may be adopted. That is, a map, which indicates the relationship between the operation state of the internal combustion engine 1 and the amount of PM discharged from the internal combustion engine 1, is previously prepared by means of a theoretical and experimental technique. The amount of PM, which corresponds to the operation state at that point in time, is read from the map. Alternatively, it is also allowable to adopt the following method. That is, the calculation is performed by using a PM generation model, for example, in accordance with the intake air amount obtained from the output of the unillustrated air flow meter, the fuel injection amount of the internal combustion engine 1, the temperature, and the humidity.

As the second stage, the pass-through ratio of PM is derived for the malfunction filter 10. As for the pass-through ratio of PM, the following procedure is also available. That is, the relationship, which is provided, for example, between the flow rate of the exhaust gas or the PM accumulation amount on the filter and the pass-through ratio of PM, is previously determined experimentally and theoretically to prepare a map beforehand. The value of the pass-through ratio of PM, which corresponds to the flow rate of the exhaust gas or the PM accumulation amount on the filter, is read from the map. The differential pressure, which is provided between the upstream and downstream sides of the filter, is changed depending on the flow rate of the exhaust gas. Therefore, there is such a tendency that the pass-through ratio is increased if the flow rate of the exhaust gas is large. In this situation, it is also allowable to consider that there is such a tendency that a larger amount of the exhaust gas is concentrated on a portion having any breakage and/or chipping, if the flow rate of the exhaust gas is small. Furthermore, if the PM accumulation amount on the filter is large, the filter 10 is clogged up with ease. Therefore, there is such a tendency that the pass-through ratio of PM is decreased. Other than the above, it is also allowable that the pass-through ratio of PM, which is provided in the malfunction filter 10, is directly estimated from the output signal of the differential pressure sensor 14 as obtained on the upstream and downstream sides of the filter 10.

Then, the amount of PM, which passes through the filter 10, can be calculated by multiplying the amount of PM discharged from the internal combustion engine 1 calculated at the first stage by the pass-through ratio of PM calculated at the second stage.

As the third stage, the amount of the exhaust gas is estimated on the basis of the output value of the unillustrated air flow meter, and the amount of the exhaust gas is corrected in accordance with the exhaust gas temperature and the exhaust gas pressure. Thus, the amount of the exhaust gas existing in the vicinity of the PM sensor 16 is obtained. Then, the PM concentration is calculated by dividing the amount of PM allowed to pass through the filter 10 by the amount of the exhaust gas existing in the vicinity of the PM sensor 16.

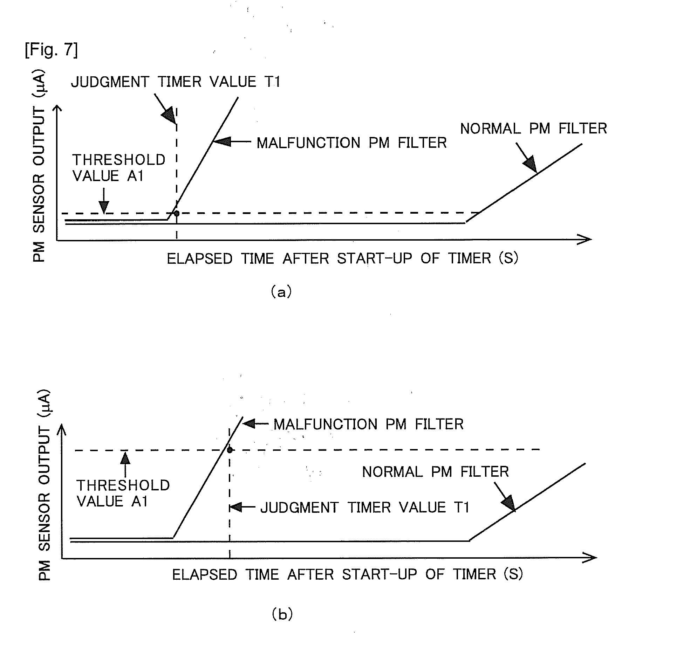

Next, an explanation will be made about the way of determining the threshold value A1 in this embodiment. As described above, the threshold value A1 is the value correlated with the judgment timer value T1. Then, for example, if the judgment timing is provided as earlier as possible in order to secure a large number of times of the judgment, as shown in Fig. 7A, it is appropriate that the threshold value A is set to a relatively low value, and the judgment timer value T1 is set to an earlier time point. Accordingly. it is possible to judge the malfunction of the filter at the earlier timing, and it is possible to increase the number of times of the judgment. However, in this case, the risk of erroneous judgment to judge that any malfunction filter is a normal filter is increased, for example, on account of any dispersion of the accumulation velocity of PM to be accumulated on the sensor element of the PM sensor 16.

On the contrary, as shown in Fig. 7B, if the threshold value A1 is set to be larger, and the judgment timer value T1 is set to a later time point, then it is possible to decrease the risk to judge that any malfunction filter is a normal filter. However, in this case, the period until the judgment is prolonged, and hence a demerit arises such that it is difficult to increase the number of times of judgment. The actual threshold value A1 and the judgment timer value T1 may be appropriately set on condition that the risk of erroneous judgment and the required number of times of judgment are taken into consideration.

In the embodiment described above, the example, in which the accumulation velocity of PM on the sensor element of the PM sensor 16 is maintained to be constant, has been explained. However, it is also allowable that the value itself of the accumulation velocity of PM on the sensor element of the PM sensor 16 is controlled by using the present invention. For example, when the operation is performed with the low load (low PM concentration, low exhaust gas flow rate, and/or low exhaust gas temperature) or when the operation state, in which the PM concentration is low on account of the decrease in EGR, is provided, then it is also allowable that the value of the application voltage is adjusted so that the value of the accumulation velocity of PM is increased. By doing so, the output time of the PM sensor 16 becomes a long time even if the filter is out of order. It is possible to avoid such an inconvenience that the malfunction judgment is not carried out during the period ranging from the start-up to the stop of the internal combustion engine.

Even when it becomes necessary to perform the filter malfunction judgment under a condition in which the PM concentration is lower than that used at the present time on account of reinforcement of legal regulation, if the value of the application voltage is adjusted so that the value of the accumulation velocity of PM is increased, then it is possible to avoid the decrease in the opportunity to judge the filter malfunction without performing, for example, any improvement of the PM sensor.

### Second Embodiment

Next, a second embodiment of the present invention will be explained. In this embodiment, an explanation will be about an example in which the value of the judgment timer value is set to a relatively later time point, and thus the malfunction judgment can be made for the filter having a slight extent of malfunction, while the malfunction judgment is made at an earlier timing for the filter having a serious extent of malfunction.

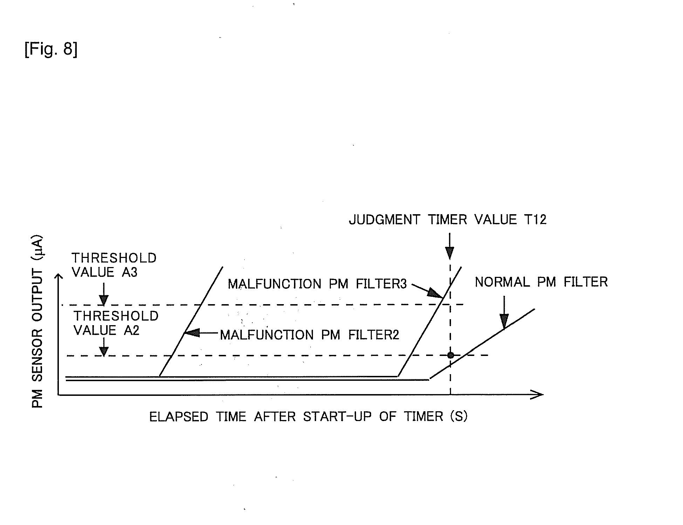

Fig. 8 illustrates the setting of the threshold value and the judgment timer value in this embodiment. As shown in Fig. 8, in this embodiment, the judgment timer value T2 is set to a relatively later time point. Furthermore, as for the threshold values, two types of threshold values, i.e., the relatively low threshold value A2 and the relatively high threshold value A3 are prepared. Then, the judgment is performed by using the relatively high threshold value A3 during the period ranging from the start-up of the timer until the elapse of the judgment timer value T2. Accordingly, the malfunction can be judged for the filter having the serious extent of malfunction even before the elapsed time arrives at the judgment timer value T2.

Then, if the elapsed time arrives at the judgment timer value T2, the malfunction judgment is performed for the malfunction filter having the slighter extent of malfunction by using the threshold value A2 which is lower than A3. When the two types of threshold values are used as described above, then the malfunction can be also judged with the judgment timer value T2 for the filter having the slighter extent of malfunction, and the malfunction can be judged at the timing earlier than the judgment timer value T2 for the malfunction filter having the more serious extent of malfunction. As a result, it is possible to widen the range of the extent of malfunction as the objective of the malfunction judgment, and it is possible to provide the sufficiently short time for the average malfunction judgment time.

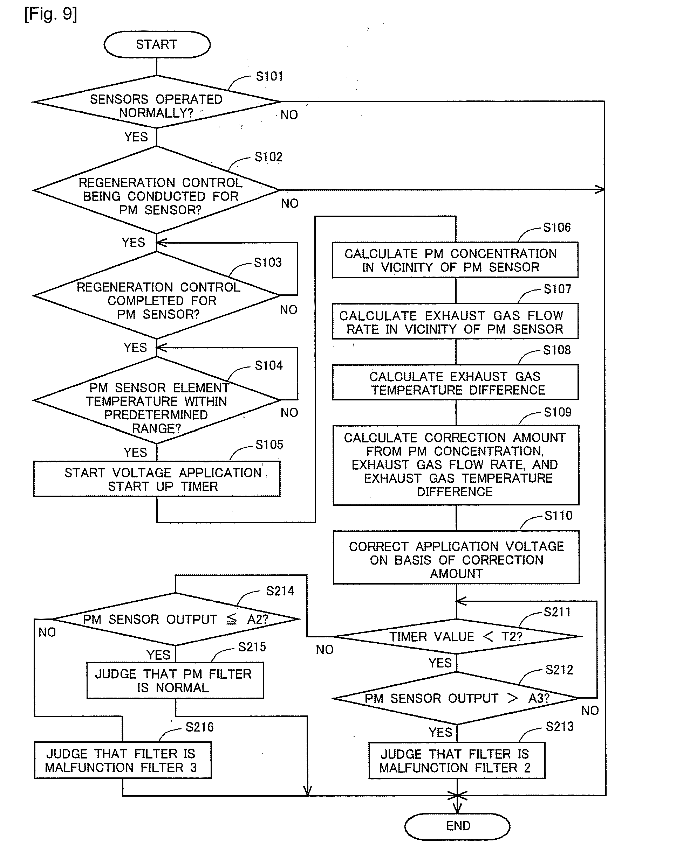

Fig. 9 shows a flow chart of a filter malfunction judgment routine 2 according to this embodiment. The point of difference between this routine and the malfunction judgment routine shown in Fig. 6 is that the processes of S211 to S216 are provided in this routine in place of S111 to S114 of the filter malfunction judgment routine. An explanation will now be made about only the point of difference between this routine and the filter malfunction judgment routine shown in Fig. 6.

In S211, it is judged whether or not the timer value is smaller than the judgment timer value T2. In this procedure, if it is judged that the timer value is smaller than the judgment timer value T2, the routine proceeds to S212. On the other hand, if it is judged that the timer value is not less than the judgment timer value T2, the routine proceeds to S214.

In S212, it is judged whether or not the output of the PM sensor 16 is larger than the threshold value A3 which is the relatively large threshold value. In this procedure, if it is judged that the output of the PM sensor 16 is not more than the threshold value A3, then it is still impossible to judge whether the filter 10 is the malfunction filter or the normal filter, and hence the routine returns to the position before the process of S211. On the other hand, if it is judged that the output of the PM sensor 16 is larger than the threshold value A3, then it is judged that the filter 10 is the malfunction filter of the serious extent, and hence the routine proceeds to S213.

In S213, it is judged that the filter 10 is the filter of the heavy extent of malfunction corresponding to the malfunction filter 2 shown in Fig. 8. If the process of S213 is completed, this routine is once completed.

Furthermore, in S214, it is judged whether or not the output of the PM sensor 16 is not more than the threshold value A2 which is the relatively small threshold value. In this procedure, if it is judged that the output of the PM sensor 16 is not more than the threshold value A2, then it is judged that the filter 10 is normal, and hence the routine proceeds to S215. On the other hand, if it is judged that the output of the PM sensor is larger than the threshold value A2, then it is judged that the filter is the malfunction filter of the slight extent, and hence the routine proceeds to S216.

In S215, it is judged that the filter 10 is the normal filter. Furthermore, in S216, it is judged that the filter 10 is the filter of the slight extent of malfunction corresponding to the malfunction filter 3 shown in Fig. 8. If the process of S215 or S216 is completed, this routine is once completed.

In this embodiment, the judgment timer value T2 corresponds to the predetermined time point. The threshold value A2 corresponds to the predetermined first threshold value. The threshold value A3 corresponds to the predetermined second threshold value.

### Third Embodiment

Next, a third embodiment of the present invention will be explained. In this embodiment, an explanation will be about an example in which the application voltage to be applied to the sensor element of the PM sensor 16 is corrected so that the influence, which is exerted on the accumulation amount of PM between the electrodes of the PM sensor 16, is canceled in relation to one factor of the three factors, i.e., the PM concentration in the exhaust gas existing in the vicinity of the PM sensor 16, the flow rate of the exhaust gas, and the exhaust gas temperature difference. The hardware components, which are provided for the internal combustion engine 1 and the exhaust gas purification system of this embodiment, are equivalent to the components of the first embodiment shown in Fig. 1.

As described above, in the first embodiment, the application voltage, which is applied to the sensor element of the PM sensor 16, is corrected so that the influence, which is exerted on the accumulation amount of PM between the electrodes of the PM sensor 16, is canceled in relation to all of the three factors of the PM concentration in the exhaust gas existing in the vicinity of the PM sensor 16, the flow rate of the exhaust gas, and the exhaust gas temperature difference. However, in the present invention, it is not necessarily indispensable that the application voltage applied to the sensor element of the PM sensor 16 should be corrected in relation to all of the three factors described above. In view of the above, in this embodiment, the application voltage applied to the sensor element of the PM sensor 16 is corrected with respect to one factor of the PM concentration, the flow rate of the exhaust gas, and the exhaust gas temperature difference.

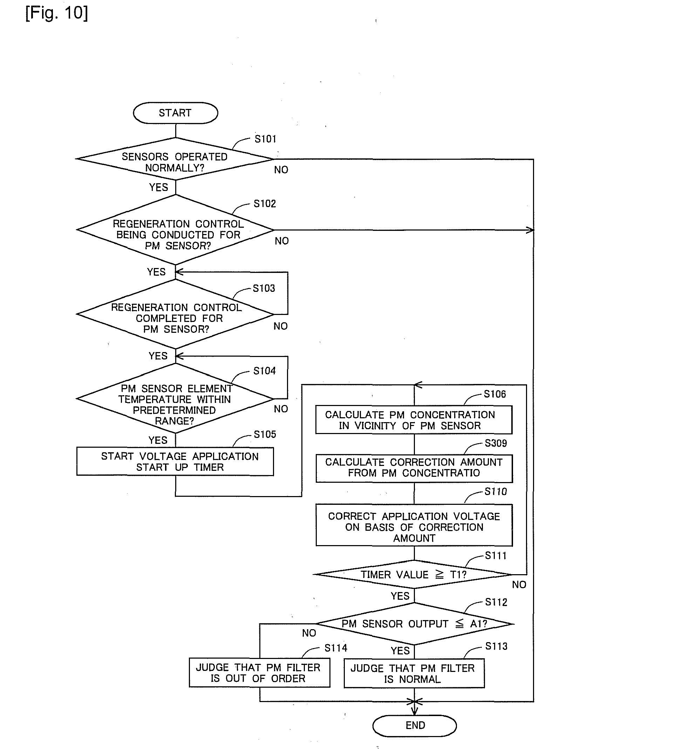

Fig. 10 shows a flow chart of a filter malfunction judgment routine 3 for correcting the application voltage applied to the sensor element so as to cancel the influence which is exerted on the accumulation amount of PM between the electrodes of the PM sensor 16 by the PM concentration in the exhaust gas existing in the vicinity of the PM sensor 16. The point of difference between this routine and the malfunction judgment routine shown in Fig. 6 is that a process of S309 is provided in this routine in place of the processes of S107 to S109 in the filter malfunction judgment routine. That is, in the filter malfunction judgment routine 3, only the PM concentration of the PM concentration, the flow rate of the exhaust gas, and the exhaust gas temperature difference is calculated. In S309, the application voltage, which corresponds to the calculated PM concentration, is read from a map which indicates the relationship between the PM concentration and the application voltage to maintain the PM accumulation velocity and which is prepared, for example, on the basis of the graph shown in Fig. 5A, depending on the PM concentration calculated in S106. The correction amount is derived from the difference between the present application voltage value and the read application voltage. The content of the processes in the other steps of this routine is equivalent to that of the filter malfunction judgment routine, and hence any explanation thereof is omitted herein.

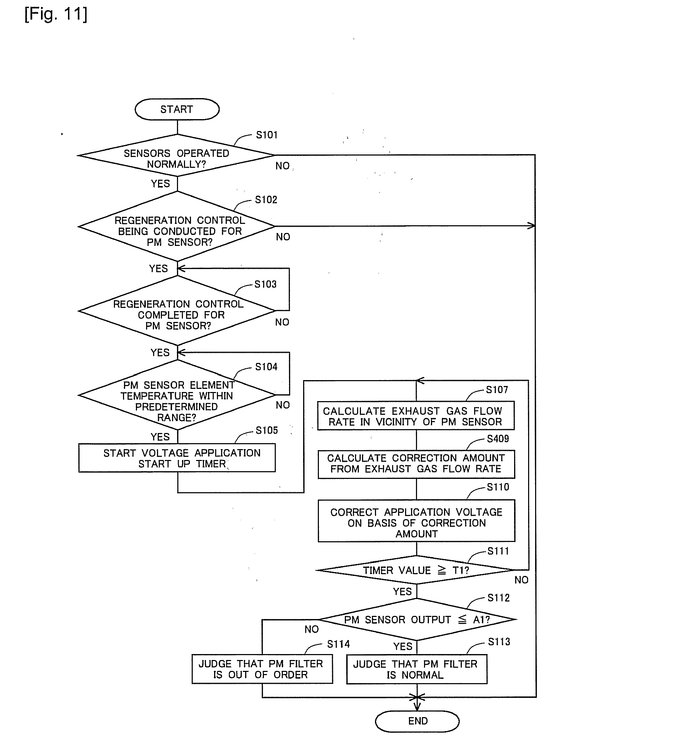

Similarly, Fig. 11 shows a flow chart of a filter malfunction judgment routine 4 for correcting the application voltage applied to the sensor element so as to cancel the influence which is exerted on the accumulation amount of PM between the electrodes of the PM sensor 16 by the flow rate of the exhaust gas existing in the vicinity of the PM sensor 16. The point of difference between this routine and the malfunction judgment routine shown in Fig. 6 is that the process of S106 in the filter malfunction judgment routine is omitted in this routine, and a process of S409 is provided in place of the processes of S108 to S109. That is, in the filter malfunction judgment routine 4, only the flow rate of the exhaust gas of the PM concentration, the flow rate of the exhaust gas, and the exhaust gas temperature difference is calculated. In S409, the application voltage, which corresponds to the calculated flow rate of the exhaust gas, is read from a map which indicates the relationship between the flow rate of the exhaust gas and the application voltage to maintain the PM accumulation velocity and which is prepared, for example, on the basis of the graph shown in Fig. 5B, depending on the flow rate of the exhaust gas calculated in S107. The correction amount is derived from the difference between the present application voltage value and the read application voltage. The content of the processes in the other steps of this routine is equivalent to that of the filter malfunction judgment routine, and hence any explanation thereof is omitted herein.

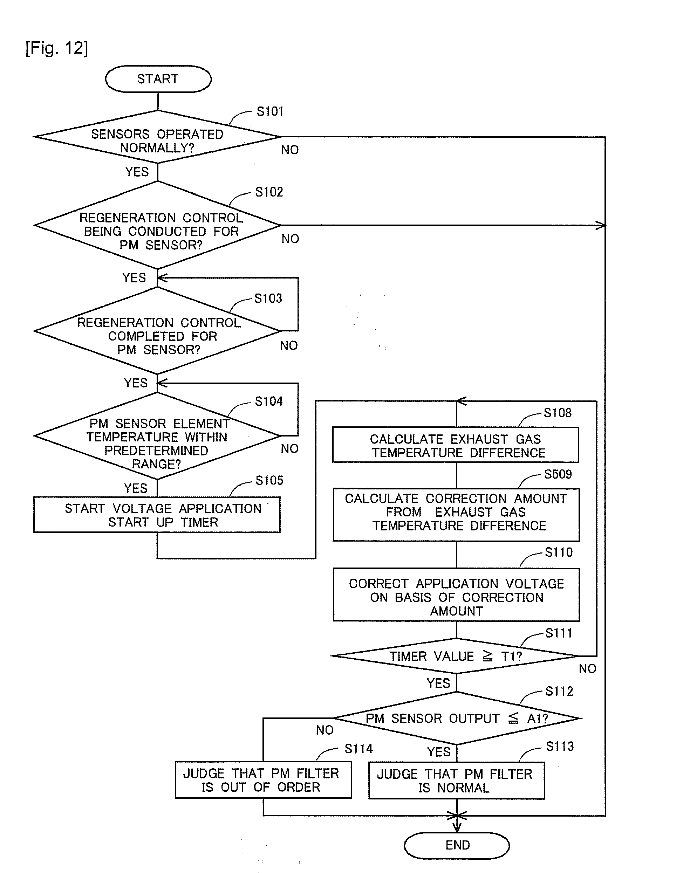

Similarly, Fig. 12 shows a flow chart of a filter malfunction judgment routine 5 for correcting the application voltage applied to the sensor element so as to cancel the influence which is exerted on the accumulation amount of PM between the electrodes of the PM sensor 16 by the exhaust gas temperature difference as the difference between the temperature of the exhaust gas existing in the vicinity of the PM sensor 16 and the temperature of the sensor element of the PM sensor 16. The point of difference between this routine and the malfunction judgment routine shown in Fig. 6 is that the processes of S106 to S107 in the filter malfunction judgment routine are omitted in this routine, and a process of S509 is provided in place of the process of S109. That is, in the filter malfunction judgment routine 5, only the exhaust gas temperature difference of the PM concentration, the flow rate of the exhaust gas, and the exhaust gas temperature difference is calculated. In S509, the application voltage, which corresponds to the calculated exhaust gas temperature difference, is read from a map which indicates the relationship between the exhaust gas temperature difference and the application voltage to maintain the PM accumulation velocity and which is prepared, for example, on the basis of the graph shown in Fig. 5C, depending on the exhaust gas temperature difference calculated in S108. The correction amount is derived from the difference between the present application voltage value and the read application voltage. The content of the processes in the other steps of this routine is equivalent to that of the filter malfunction judgment routine, and hence any explanation thereof is omitted herein.

As explained above, in the embodiment of the present invention, the application voltage applied to the sensor element is corrected so as to cancel the influence exerted on the accumulation amount of PM between the electrodes of the PM sensor, in relation to any one factor of the three factors, i.e., the PM concentration in the exhaust gas existing in the vicinity of the PM sensor 16, the flow rate of the exhaust gas, and the exhaust gas temperature difference. Also in the control of the embodiment of the present invention, if the factor, which exerts the greater influence, is selected to cancel the influence, it is possible to sufficiently improve the accuracy of the filter malfunction judgment by means of the simple process. Furthermore, in the embodiment of the present invention, it is also possible to easily avoid the mutual interference of the correction of the application voltage with respect to the respective factors of the PM concentration in the exhaust gas existing in the vicinity of the PM sensor 16, the flow rate of the exhaust gas, and the exhaust gas temperature difference.

In the embodiment described above, it is also allowable that the application voltage applied to the PM sensor 16 is corrected so as to cancel the influence exerted on the accumulation amount of PM between the electrodes of the PM sensor, in relation to any two factors of the three factors, i.e., the PM concentration in the exhaust gas existing in the vicinity of the PM sensor 16, the flow rate of the exhaust gas, and the exhaust gas temperature difference. Furthermore, it is also allowable that the application voltage applied to the PM sensor 16 is corrected so as to cancel the influence exerted on the accumulation amount of PM between the electrodes of the PM sensor, in relation to those including any factor other than the three factors described above.

In the embodiment described above, the application voltage applied to the PM sensor 16 is corrected so as to cancel the influence exerted on the accumulation amount of PM between the electrodes of the PM sensor, in relation to at least any one of the factors of the PM concentration in the exhaust gas existing in the vicinity of the PM sensor 16, the flow rate of the exhaust gas, and the exhaust gas temperature difference. However, the present invention includes the correction of the application voltage applied to the PM sensor so as to mitigate the influence exerted on the accumulation amount of PM between the electrodes of the PM sensor, in relation to at least any one of the factors described above. That is, even if the influence, which is exerted by the respective factors, is not completely canceled, it is possible to obtain the effect of the present invention by merely mitigating the influence.

In the embodiment described above, the example is explained, in which the malfunction judgment for the filter is carried out by utilizing only the output of the PM sensor 16. However, the present invention is also applicable to any exhaust gas purification system which also utilizes the output of the differential pressure sensor 14 in addition to the output of the PM sensor 16 in combination for the malfunction judgment for the filter.

In the embodiment described above, the example is explained, in which the present invention is applied to the PM sensor which has a pair of or a plurality of electrodes. However, the form of the electrode of the PM sensor, to which the present invention is applied, is not especially limited. For example, the present invention is applicable to electrodes of various forms including, for example, helical electrodes, U-shaped electrodes, and spider web-shaped electrodes.

In the embodiment described above, the filter malfunction judging means is constructed to include ECU 20 which executes any one of the filter malfunction judgment routine to the filter malfunction judgment routine 5.

### PARTS LIST

1: internal combustion engine, 5: exhaust tube, 10: filter, 14: differential pressure sensor, 15: exhaust gas temperature sensor, 16: PM sensor, 17: SCU, 20: ECU.

## Claims

1. An exhaust gas purification system for an internal combustion engine (1), comprising:
a filter (10) provided for an exhaust gas passage (5) of the internal combustion engine (1) and configured to collect particulate matter in an exhaust gas;
PM detecting means (16) provided on a downstream side of the filter (10) in the exhaust gas passage (5), and configured to collect the particulate matter in the exhaust gas allowed to pass through the filter between electrodes by applying a voltage between the electrodes, and configured to output a signal corresponding to an amount of collected particulate matter; and
filter malfunction judging means (20) configured to judge a malfunction of the filter on the basis of the output of the PM detecting means (16) at a predetermined time point during the collection of the particulate matter, **characterized in that**
the filter malfunction judging means are further configured so that the voltage applied between the electrodes is changed during the collection of the particulate matter by the PM detecting means (16) depending on at least one of a concentration of the particulate matter in the exhaust gas on the downstream side of the filter (10), a flow rate of the exhaust gas on the downstream side of the filter (10), and an exhaust gas temperature difference as a difference between a temperature of the exhaust gas on the downstream side of the filter (10) and a temperature of the PM detecting means (16) so that:
the voltage applied between the electrodes is lowered if the concentration of the particulate matter in the exhaust gas on the downstream side of the filter (10) is higher, as compared with if the concentration of the particulate matter is lower;
the voltage applied between the electrodes is lowered if the flow rate of the exhaust gas on the downstream side of the filter (10) is larger, as compared with if the flow rate of the exhaust gas is smaller; and/or
the voltage applied between the electrodes is lowered if the exhaust gas temperature difference as the difference between the temperature of the exhaust gas on the downstream side of the filter (10) and the temperature of the PM detecting means (16) is larger, as compared with if the exhaust gas temperature difference is smaller.

2. The exhaust gas purification system for the internal combustion engine (1) according to claim 1, wherein the voltage applied between the electrodes of the PM detecting means (16) is changed so that change of an amount of collection of the particulate matter collected between the electrodes, which depends on the concentration of the particulate matter, the flow rate of the exhaust gas, or the exhaust gas temperature difference, is mitigated to a predetermined allowable level.

3. The exhaust gas purification system for the internal combustion engine (1) according to claim 1 or 2, wherein the voltage applied between the electrodes of the PM detecting means (16) is changed so that change of an amount of collection of the particulate matter collected between the electrodes, which depends on the concentration of the particulate matter, the flow rate of the exhaust gas, or the exhaust gas temperature difference, is canceled.

4. The exhaust gas purification system for the internal combustion engine (1) according to any one of claims 1 to 3, wherein:
the predetermined time point is a time point occurring after a predetermined time following completion of regeneration control of the PM detecting means (16); and
the filter malfunction judging means (20) judges that the filter (10) malfunctions if an output signal of the PM detecting means (16) provided at the predetermined time point is larger than a predetermined threshold value.

5. The exhaust gas purification system for the internal combustion engine (1) according to claim 4, wherein:
two threshold values, which are a predetermined first threshold value and a predetermined second threshold value larger than the first threshold value, are set; and
the filter malfunction judging means (20) judges that the filter malfunctions if the output signal of the PM detecting means (16), which is provided at a time point earlier than the predetermined time point, is larger than the second threshold value, and the filter malfunction judging means (20) judges that the filter malfunctions if the output signal of the PM detecting means (16), which is provided at the predetermined time point, is larger than the first threshold value.

6. A method for judging malfunction of a filter (10) of an exhaust gas purification system for an internal combustion engine (1), the exhaust gas purification system comprising:
the filter (10) which is provided for an exhaust gas passage (5) of the internal combustion engine (1) and which collects particulate matter in an exhaust gas; and
PM detecting means (16) which is provided on a downstream side of the filter (10) in the exhaust gas passage (5), which collects the particulate matter in the exhaust gas allowed to pass through the filter (10) between electrodes by applying a voltage between the electrodes, and which outputs a signal corresponding to an amount of collection of the particulate matter; and the method **characterized by** comprising:
changing the voltage applied between the electrodes of the PM detecting means (16) so that change of the amount of collection of the particulate matter collected between the electrodes, which depends on at least one of three factors of a concentration of the particulate matter in the exhaust gas on the downstream side of the filter, a flow rate of the exhaust gas on the downstream side of the filter, and an exhaust gas temperature difference as a difference between a temperature of the exhaust gas on the downstream side of the filter and a temperature of the PM detecting means, is canceled or mitigated during the collection of the particulate matter by the PM detecting means (16); and
judging the malfunction of the filter on the basis of magnitude of output of the PM detecting means (16).

## Patentansprüche

1. Abgasreinigungssystem für einen Verbrennungsmotor (1), umfassend:
einen Filter (10), der für einen Abgasdurchgang (5) des Verbrennungsmotors (1) vorgesehen ist und zum Sammeln von Partikelstoffen in einem Abgas konfiguriert ist,
PS-Erkennungsmittel (16), die auf einer stromabwärtigen Seite des Filters (10) im Abgasdurchgang (5) vorgesehen sind und zum Sammeln der Partikelstoffe im Abgas, denen ermöglicht wurde, den Filter zu durchlaufen, zwischen Elektroden durch Anlegen einer Spannung zwischen den Elektroden konfiguriert sind und zum Ausgeben eines Signals konfiguriert sind, das einer Menge von gesammelten Partikelstoffen entspricht, und
Filterfehlfunktionsbeurteilungsmittel (20), die zum Beurteilen einer Fehlfunktion des Filters auf der Grundlage der Ausgabe der PS-Erkennungsmittel (16) zu einem vorgegebenen Zeitpunkt während der Sammlung der Partikelstoffe konfiguriert sind, **dadurch gekennzeichnet, dass**
die Filterfehlfunktionsbeurteilungsmittel derart konfiguriert sind, dass die Spannung, die zwischen den Elektroden angelegt ist, während der Sammlung der Partikelstoffe durch die PS-Erkennungsmittel (16) abhängig von zumindest einem von einer Konzentration der Partikelstoffe im Abgas auf der stromabwärtigen Seite des Filters (10), einer Durchflussmenge der Abgases auf der stromabwärtigen Seite des Filters (10) und einem Abgastemperaturunterschied als ein Unterschied zwischen einer Temperatur des Abgases auf der stromabwärtigen Seite des Filters (10) und einer Temperatur der PS-Erkennungsmittel (16) derart geändert wird, dass:
die Spannung, die zwischen den Elektroden angelegt ist, herabgesetzt wird, wenn die Konzentration der Partikelstoffe im Abgas auf der stromabwärtigen Seite des Filters (10) höher als im Vergleich dazu ist, wenn die Konzentration der Partikelstoffe niedriger ist,
die Spannung, die zwischen den Elektroden angelegt ist, herabgesetzt wird, wenn die Durchflussmenge des Abgases auf der stromabwärtigen Seite des Filters (10) größer als im Vergleich dazu ist, wenn die Durchflussmenge des Abgases kleiner ist, und/oder
die Spannung, die zwischen den Elektroden angelegt ist, herabgesetzt wird, wenn der Abgastemperaturunterschied als der Unterschied zwischen der Temperatur des Abgases auf der stromabwärtigen Seite des Filters (10) und der Temperatur der PS-Erkennungsmittel (16) größer als im Vergleich dazu ist, wenn der Abgastemperaturunterschied kleiner ist.

2. Abgasreinigungssystem für den Verbrennungsmotor (1) nach Anspruch 1, wobei die Spannung, die zwischen den Elektroden der PS-Erkennungsmittel (16) angelegt ist, derart geändert wird, dass die Änderung einer Sammelmenge der Partikelstoffe, die zwischen den Elektroden gesammelt werden, welche von der Konzentration der Partikelstoffe, der Durchflussmenge des Abgases oder dem Abgastemperaturunterschied abhängt, auf eine vorgegebene, zulässige Höhe abgeschwächt wird.

3. Abgasreinigungssystem für den Verbrennungsmotor (1) nach einem der Ansprüche 1 oder 2, wobei die Spannung, die zwischen den Elektroden der PS-Erkennungsmittel (16) angelegt ist, derart geändert wird, dass die Änderung einer Sammelmenge der Partikelstoffe, die zwischen den Elektroden gesammelt werden, welche von der Konzentration der Partikelstoffe, der Durchflussmenge des Abgases oder dem Abgastemperaturunterschied abhängt, aufgehoben wird.

4. Abgasreinigungssystem für den Verbrennungsmotor (1) nach einem der Ansprüche 1 bis 3, wobei:
der vorgegebene Zeitpunkt ein Zeitpunkt ist, der nach einer vorgegebenen Zeit auftritt, die auf den Abschluss einer Regenerationssteuerung der PS-Erkennungsmittel (16) folgt, und
das Filterfehlfunktionsbeurteilungsmittel (20) beurteilt, dass der Filter (10) schlecht arbeitet, wenn ein Ausgangssignal der PS-Erkennungsmittel (16), das zum vorgegebenen Zeitpunkt zugeführt wird, größer als ein vorgegebener Schwellenwert ist.

5. Abgasreinigungssystem für den Verbrennungsmotor (1) nach Anspruch 4, wobei:
zwei Schwellenwerte, die ein vorgegebener erster Schwellenwert und ein vorgegebener zweiter Schwellenwert, welcher größer als der erste Schwellenwert ist, eingestellt sind, und
das Filterfehlfunktionsbeurteilungsmittel (20) beurteilt, dass der Filter schlecht arbeitet, wenn das Ausgangssignal der PS-Erkennungsmittel (16), das zu einem Zeitpunkt vor dem vorgegebenen Zeitpunkt zugeführt wird, größer als der zweite Schwellenwert ist, und das Filterfehlfunktionsbeurteilungsmittel (20) beurteilt, dass der Filter schlecht arbeitet, wenn das Ausgangssignal der PS-Erkennungsmittel (16), das zum vorgegebenen Zeitpunkt zugeführt wird, größer als der erste Schwellenwert ist.

6. Verfahren zum Beurteilen der Fehlfunktion eines Filters (10) eines Abgasreinigungssystems für einen Verbrennungsmotor (1), das Abgasreinigungssystem umfassend:
den Filter (10), der für einen Abgasdurchgang (5) des Verbrennungsmotors (1) vorgesehen ist und Partikelstoffen in einem Abgas sammelt,
PS-Erkennungsmittel (16), das auf einer stromabwärtigen Seite des Filters (10) im Abgasdurchgang (5) vorgesehen ist, die Partikelstoffe im Abgas, denen ermöglicht wurde, den Filter (10) zu durchlaufen, zwischen Elektroden durch Anlegen einer Spannung zwischen den Elektroden sammelt, und das ein Signal ausgibt, das einer Sammelmenge der Partikelstoffe entspricht; und wobei das Verfahren **dadurch gekennzeichnet ist, dass** es umfasst:
Ändern der Spannung, die zwischen den Elektroden des PS-Erkennungsmittels (16) angelegt ist, sodass eine Änderung der Sammelmenge der Partikelstoffe, die zwischen den Elektroden gesammelt werden, welche von zumindest einem von drei Faktoren von einer Konzentration der Partikelstoffe im Abgas auf der stromabwärtigen Seite des Filters, einer Durchflussmenge der Abgases auf der stromabwärtigen Seite des Filters und einem Abgastemperaturunterschied als ein Unterschied zwischen einer Temperatur des Abgases auf der stromabwärtigen Seite des Filters und einer Temperatur des PS-Erkennungsmittels abhängt, während der Sammlung der Partikelstoffe durch das PS-Erkennungsmittel (16) aufgehoben oder abgeschwächt wird, und
Beurteilen der Fehlfunktion des Filters auf der Grundlage einer Größenordnung der Ausgabe des PS-Erkennungsmittels (16).

## Revendications

1. Système de purification de gaz d'échappement pour un moteur à combustion interne (1), comprenant :
un filtre (10) prévu pour un passage de gaz d'échappement (5) du moteur à combustion interne (1) et configuré pour collecter la matière particulaire dans un gaz d'échappement ;
des moyens de détection de matière particulaire (16) prévus d'un côté aval du filtre (10) dans le passage de gaz d'échappement (5), et configurés pour collecter la matière particulaire dans le gaz d'échappement autorisé à passer à travers le filtre entre les électrodes en appliquant une tension entre les électrodes, et configurés pour délivrer un signal correspondant à une quantité de matière particulaire collectée ; et
des moyens de jugement de dysfonctionnement de filtre (20) configurés pour juger un dysfonctionnement du filtre sur la base de la sortie des moyens de détection de matière particulaire (16) à un instant prédéterminé pendant la collecte de la matière particulaire, **caractérisé en ce que**
les moyens de jugement de dysfonctionnement de filtre sont en outre configurés de sorte que la tension appliquée entre les électrodes soit changée pendant la collecte de la matière particulaire par les moyens de détection de matière particulaire (16) en fonction d'au moins l'un d'une concentration de la matière particulaire dans le gaz d'échappement en aval du filtre (10), d'un débit du gaz d'échappement en aval du filtre (10), et d'une différence de température de gaz d'échappement en tant que différence entre une température du gaz d'échappement en aval du filtre (10) et une température des moyens de détection de matière particulaire (16) de sorte que :
la tension appliquée entre les électrodes soit diminuée si la concentration de la matière particulaire dans le gaz d'échappement en aval du filtre (10) est plus élevée, comparé au cas où la concentration de la matière particulaire est plus faible ;
la tension appliquée entre les électrodes soit diminuée si le débit du gaz d'échappement en aval du filtre (10) est plus élevé, comparé au cas où le débit du gaz d'échappement est plus faible ; et/ou
la tension appliquée entre les électrodes soit diminuée si la différence de température du gaz d'échappement en tant que différence entre la température de gaz d'échappement en aval du filtre (10) et la température des moyens de détection de matière particulaire (16) est plus grande, comparé au cas où la différence de température de gaz d'échappement est plus petite.

2. Système de purification de gaz d'échappement pour le moteur à combustion interne (1) selon la revendication 1, dans lequel la tension appliquée entre les électrodes des moyens de détection de matière particulaire (16) est changée de sorte que le changement d'une quantité de collecte de la matière particulaire collectée entre les électrodes, qui dépend de la concentration de la matière particulaire, du débit du gaz d'échappement, ou de la différence de température de gaz d'échappement, soit atténué à un niveau admissible prédéterminé.

3. Système de purification de gaz d'échappement pour le moteur à combustion interne (1) selon la revendication 1 ou 2, dans lequel la tension appliquée entre les électrodes des moyens de détection de matière particulaire (16) est changée de sorte que le changement d'une quantité de collecte de la matière particulaire collectée entre les électrodes, qui dépend de la concentration de la matière particulaire, du débit du gaz d'échappement, ou de la différence de température de gaz d'échappement, soit annulé.

4. Système de purification de gaz d'échappement pour le moteur à combustion interne (1) selon l'une quelconque des revendications 1 à 3, dans lequel :
l'instant prédéterminé est un instant apparaissant après un temps prédéterminé à la suite de l'achèvement de la commande de régénération des moyens de détection de matière particulaire (16) ; et
les moyens de jugement de dysfonctionnement de filtre (20) jugent que le filtre (10) ne fonctionne pas correctement si un signal de sortie des moyens de détection de matière particulaire (16) fourni à l'instant prédéterminé est supérieur à une valeur de seuil prédéterminée.

5. Système de purification de gaz d'échappement pour le moteur à combustion interne (1) selon la revendication 4, dans lequel :
deux valeurs de seuil, qui sont une première valeur de seuil prédéterminée et une deuxième valeur de seuil prédéterminée supérieure à la première valeur de seuil, sont fixées ; et
les moyens de jugement de dysfonctionnement de filtre (20) jugent qui le filtre ne fonctionne pas correctement si le signal de sortie des moyens de détection de matière particulaire (16), qui est fourni à un instant précédent l'instant prédéterminé, est supérieur à la deuxième valeur de seuil, et les moyens de jugement de dysfonctionnement de filtre (20) jugent que le filtre ne fonctionne pas correctement si le signal de sortie des moyens de détection de matière particulaire (16), qui est fourni à l'instant prédéterminé, est supérieur à la première valeur de seuil.

6. Procédé pour juger le dysfonctionnement d'un filtre (10) d'un système de purification de gaz d'échappement pour un moteur à combustion interne (1), le système de purification de gaz d'échappement comprenant :
le filtre (10) qui est prévu pour un passage de gaz d'échappement (5) du moteur à combustion interne (1) et qui collecte la matière particulaire dans un gaz d'échappement ; et
des moyens de détection de matière particulaire (16) qui sont prévus d'un côté aval du filtre (10) dans le passage de gaz d'échappement (5), qui collectent la matière particulaire dans le gaz d'échappement autorisé à passer à travers le filtre (10) entre des électrodes en appliquant une tension entre les électrodes, et qui délivrent un signal correspondant à une quantité de collecte de la matière particulaire ; et le procédé étant **caractérisé en ce qu'**il comprend :
le changement de la tension appliquée entre les électrodes des moyens de détection de matière particulaire (16) de sorte que le changement de la quantité de collecte de la matière particulaire collectée entre les électrodes, qui dépend d'au moins l'un de trois facteurs consistant en une concentration de la matière particulaire dans le gaz d'échappement en aval du filtre, un débit du gaz d'échappement en aval du filtre, et une différence de température de gaz d'échappement en tant que différence entre une température du gaz d'échappement en aval du filtre et une température des moyens de détection de matière particulaire, soit annulé ou atténué pendant la collecte de la matière particulaire par les moyens de détection de matière particulaire (16) ; et
le jugement du dysfonctionnement du filtre sur la base de l'amplitude de la sortie des moyens de détection de matière particulaire (16).
